(19) **Europäisches Patentamt**
**European Patent Office**
**Office européen des brevets**

(11) **EP 3 775 799 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **19718232.2**

(22) Anmeldetag: **05.04.2019**

(51) Internationale Patentklassifikation (IPC):
***G01F 25/00*** *(2022.01)*     ***G01M 15/02*** *(2006.01)*

(52) Gemeinsame Patentklassifikation (CPC):
**G01F 25/10**

(86) Internationale Anmeldenummer:
**PCT/AT2019/060116**

(87) Internationale Veröffentlichungsnummer:
**WO 2019/191798 (10.10.2019 Gazette 2019/41)**

(54) **VERFAHREN ZUR KALIBRIERUNG EINES MASSENSTROMMESSERS IN EINER CONSTANT VOLUME SAMPLING (CVS) ABGASANALYSEANLAGE**

METHOD FOR CALIBRATING A MASS FLOW METER IN A CONSTANT VOLUME SAMPLING (CVS) EXHAUST GAS ANALYSIS SYSTEM

PROCÉDÉ D'ÉTALONNAGE D'UN DÉBITMÈTRE MASSIQUE DANS UNE INSTALLATION D'ANALYSE DE GAZ D'ÉCHAPPEMENT PAR ÉCHANTILLONNAGE À VOLUME CONSTANT (CVS)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2018 AT 502872018**

(43) Veröffentlichungstag der Anmeldung:
**17.02.2021 Patentblatt 2021/07**

(73) Patentinhaber: **AVL List GmbH**
**8020 Graz (AT)**

(72) Erfinder: **SEEWALD, Georg**
**8054 Graz (AT)**

(74) Vertreter: **terpatent Patentanwälte ter Smitten Eberlein-Van Hoof Rütten Daubert Partnerschaftsgesellschaft mbB Burgunderstraße 29 40549 Düsseldorf (DE)**

(56) Entgegenhaltungen:
**EP-A1- 1 333 270**     **EP-A1- 2 811 267**
**US-A1- 2006 216 826**     **US-A1- 2008 087 107**

**Beschreibung**

Die Erfindung betrifft ein Verfahren zur Kalibrierung eines Massenstrommessers in einer Constant Volume Sampling (CVS) Abgasanalyseanlage mit einer Abgasquelle, über die Abgas in einen Abgaskanal eingeleitet wird, der in einen Mischkanal mündet, einem Verdünnungsluftkanal, in den Verdünnungsluft gefördert wird, und der in den Mischkanal mündet, einem ersten Massenstrommesser im Mischkanal, in dem ein Abgas-Luftgemisch strömt, und mit dem ein Massenstrom des Abgas-Luftgemisches im Mischkanal der Abgasanalyseanlage gemessen wird, einem zweiten zu kalibrierenden Massenstrommesser im Verdünnungsluftkanal, mit dem ein Massenstrom der in die Abgasanalyseanlage angesaugten Luft gemessen wird, einem ersten Gasanalysegerät, in dem eine Kohlenstoffdioxidkonzentration des Abgas-Luftgemisches im Mischkanal kontinuierlich und/oder diskontinuierlich über Probebeutel für einen definierten Messzyklus gemessen wird und einem zweiten Gasanalysegerät, in dem die Kohlenstoffdioxidkonzentration des Rohabgases im Abgaskanal kontinuierlich gemessen wird.

Derartige Abgasanalyseanlagen sowie die zugehörigen Verfahren zu deren Betrieb sind bekannt und unterliegen gesetzlichen Regelungen, nach denen beispielsweise die Motoren von Kraftfahrzeugen bestimmte Emissionsgrenzwerte nicht überschreiten dürfen, so beispielsweise die ECE-Richtlinie R 83 für den europäischen Raum oder der "Code of federal regulations"/Gesetz Nr.40 für den US-amerikanischen Raum. In diesen Regularien wird neben den Emissionsgrenzwerten auch die Art der Probenahme durch Anlagen mit variabler Verdünnung zur Messung der Emissionen größtenteils geregelt.

Derartige Anlagen sind unter dem Begriff CVS-Anlage ("constant volume sampling") bekannt. Bei diesen Anlagen wird dem Abgas immer so viel Luft beigemischt, dass ein weitestgehend konstanter Gesamt-Massenstrom des Luft-Abgas-Gemisches entsteht, welches durch eine kritisch betriebene Venturidüse am Ende des Mischkanals sichergestellt wird. Die über diese Anlagen in Beuteln entnommenen Proben werden im Folgenden in einem Analysator bezüglich ihrer Schadstoffanteile analysiert. Insbesondere werden der Kohlendioxid-, der Kohlenmonoxid-, Kohlenwasserstoff- sowie der Stickoxid-Anteil gemessen.

Zusätzlich sind Messgeräte bekannt, welche eine Analyse des Abgases unmittelbar stromabwärts des Endrohres des Verbrennungsmotors messen, also in einem Bereich, in dem das Abgas noch nicht verdünnt vorliegt. Eine solche Messung ist insbesondere bei geringen Emissionen erforderlich, wie sie insbesondere bei Hybridfahrzeugen entstehen, in denen in Phasen des elektrischen Antriebs keine Schadstoffe entstehen.

Die in den Abgasbeuteln gesammelten Proben sind entsprechend verdünnte Abgasproben, so dass eine Umrechnung auf den tatsächlich ausgestoßenen Abgasmassenstrom erforderlich ist, da eine korrekte direkte Messung des reinen Abgasmassenstroms derzeit sehr schwierig durchführbar ist, da derartige Messgeräte aufgrund der hochbelasteten Umgebung zu starker Versottung neigen, wodurch die Messergebnisse gegebenenfalls verfälscht werden. Um den Abgasmassenstrom zu bestimmen, ist es daher erforderlich diesen aus einem zu messenden Verdünnungsluftmassenstrom und dem ebenfalls zu messenden Mischgasmassenstrom zu berechnen. Der Mischgasgesamtmassenstrom ist üblicherweise aufgrund der überkritisch betriebenen Venturidüse konstant und wird über einen ersten Massenstrom-messer, der beispielsweise als kalibriertes Venturirohr, Laminar-Durchflussmesser oder kalibrierter Flügelraddurchflussmesser ausgeführt werden kann, gemessen. Der Verdünnungsluftstrom wird über einen zweiten Massenstrommesser gemessen, der beispielsweise als Ultraschalldurchflussmesser ausgeführt werden kann. Der erste Massenstrommesser ist dabei nach den gesetzlichen Vorschriften zu kalibrieren.

Beide Massenstrommesser sind je nach Gesetzgebung und Kundenanforderungen mit einer hohen Genauigkeit von beispielsweise 0,5% zu kalibrieren. Problematisch ist jedoch, dass der Abgasmassenstrom aus den beiden großen Volumenströmen des ersten und zweiten Massenstrommessers durch Differenzbildung zu bestimmen ist. Dies hat zur Folge, dass bei einer Abweichung der Messwerte der beiden Massenstrommesser in entgegengesetzte Richtungen je nach relativer Größe des Abgasstroms zum Gesamtstrom sehr große Messfehler im hohen zweistelligen oder sogar niedrigen dreistelligen Prozentbereich bezüglich des Abgasstroms entstehen können.

Aus diesem Grund werden die beiden Massenstrommesser aufeinander abgestimmt, um einen Drift In entgegengesetzte Richtungen zu vermeiden. Hierzu ist es beispielsweise bekannt, eine Kalibrierung vorzunehmen, indem der Abgasstrom ausgeschaltet wird und die beiden Massenstrommesser auf einen gleichen Messwert eingestellt werden. Es hat sich jedoch herausgestellt, dass auf diese Weise die geforderten Genauigkeitswerte nicht erreicht werden konnten.

Aus der US 2006/0216826 A1 ist ein Kalibrierverfahren bekannt, bei dem ein erster Massenstrommesser in einem Verdünnungskanal und ein Massenstrommesser in einem Mischkanal kalibriert werden, indem beide Massenstrommesser durch Vergleich ihrer Differenzwerte mit den Messwerten eines zusätzlichen Massenstrommessers im Rohabgaskanal kalibriert werden.

Des Weiteren ist aus der EP 2 811 267 A1 eine Abgasanalyseanlage bekannt, bei der ein Rohabgas in eine Probesammelleitung abgeführt wird und ein Mischstrom in eine Probensammelleitung abgeführt wird, die jeweils mit CO2- Analysegeräten verbunden sind. In einer Recheneinheit wird aus den Messwerten dieser beiden Probenahmen und einem festen Massenstromregler am Verdünnungstunnel ein Abgasmassenstrom berechnet, indem das Verhältnis dieser beiden Konzentrationen zueinander mit dem Volumenstrom des Mischgases multipliziert wird. Eine Kalibrierung erfolgt nicht.

So wird in der EP 2 515 095 A1 ein Verfahren zur Ermittlung des Abgasstroms beschrieben, bei dem auf eine Differenzbildung der beiden Massenstrommesser zur Bestimmung des Abgasstroms verzichtet wird und so ein Fehler durch eine entgegengesetzte Abweichung der beiden Massenstrommesser verhindert wird. Hierzu wird stromaufwärts der Einleitstelle für den Abgasstrom im Luftkanal eine weitere Abzweigung vorgesehen, über die Luft abgesaugt werden kann. In diesem zusätzlichen Luftkanal befinden sich eine Pumpe und ein dritter Massenstrommesser. Die Förderpumpen der Anlage werden anschließend so geregelt, dass die Messwerte des ersten und des zweiten Massenstrommessers jeweils gleich sind, so dass der Messwert des dritten Messers exakt dem Abgasmassenstrom entspricht, wodurch zur Bestimmung dessen auf eine Differenzbildung verzichtet werden kann. Allerdings hat dieses Verfahren erstens einen deutlich erhöhten Bauteileaufwand zur Folge und zweitens muss jeweils über die Pumpen beziehungsweise ein den Leitungen angeordneter Durchflussregler nachgeregelt werden, was insbesondere bei kürzeren Messintervallen und instationären Betriebszuständen zu Fehlern führen kann.

Es stellt sich daher die Aufgabe, ein Verfahren zur Kalibrierung eines Massenstrommessers in einer Constant Volume Sampling (CVS) Abgasanalyseanlage zur Verfügung zu stellen, bei dem ohne zusätzlichen Bauteileaufwand eine hohe Genauigkeit bei der Bestimmung des Abgasmassenstroms gewährleistet werden kann, indem Fehler durch Ungenauigkeiten der Messwerte der beiden Massenstrommesser minimiert werden.

Diese Aufgabe wird durch ein Verfahren zur Kalibrierung eines Massenstrommessers in einer Constant Volume Sampling (CVS) Abgasanalyseanlage mit den Merkmalen des Hauptanspruchs gelöst.

Dadurch, dass ein Kalibrierfaktor für den zweiten Massenstrommesser durch Vergleich einer ersten Kohlenstoffdioxidmasse, die über die gemessene Kohlenstoffdioxidkonzentration im ersten Gasanalysegerät bestimmt wird, mit einer zweiten Kohlenstoffdioxidmasse, die in Abhängigkeit der gemessenen Kohlenstoffdioxidkonzentration des zweiten Gasanalysegerätes und den Massenströmen der beiden Massenstrommesser bestimmt wird, werden Abweichungen zwischen den beiden Massenstrommessern minimiert, ohne hierfür zusätzliche Geräte zu benötigen. Es sei darauf hingewiesen, dass im Sinne der Anmeldung auch Volumenstrommesser als Massenstrommesser gelten, da auch diese durch eine Umrechnung, in der die Dichte berücksichtigt wird, als Massenstrommesser genutzt werden können.

Vorzugsweise erfolgt dies, indem zur Bestimmung des Kalibrierfaktos eine am ersten Gasanalysegerät ermittelte erste Kohlenstoffdioxidmasse $m_{MixCO2}$ gleichgesetzt wird mit einer zweiten Kohlenstoffdioxidmasse $m_{exhCO2}$, die errechnet wird, indem die Kohlenstoffdioxidkonzentration $c_{exhCO2}$ des zweiten Gasanalysegerätes multipliziert mit der Differenz aus den Massenströmen des ersten Massenstrommessers $\dot{m}_{Mix}$ und des mit einem Kalibrierfaktor $F_{Kal}$ multiplizierten zweiten Massenstrommessers $\dot{m}_{dil}$ über die Zeit integriert wird.

Die entsprechende Formel hierzu lautet:

$$m_{mix_{CO_2}} = \int_0^t (\dot{m}_{Mix} - F_{Kal} \times \dot{m}_{dil}) \times c_{exh_{CO_2}}\, dt$$

Das Integral entspricht dabei dem Abgasmassenstrom, berechnet aus der Differenz des Gesamtmassenstroms und dem korrigierten Verdünnungsluftstrom multipliziert mit der Konzentration an $CO_2$, welche direkt am Abgasrohr kontinuierlich gemessen wird, welches anschließend über die Messzeit integriert wird und der Masse an $CO_2$ entsprechen muss, die am Ende des Mischrohres gemessen wird. So wird der Kalibrierfaktor in Abhängigkeit der Kohlenstoffdioxidkonzentrationen bestimmt, so dass Messwertfehler zwischen den beiden Massenstrommessern durch Gleichsetzung dieser errechneten $CO_2$-Masse am Abgasrohr mit der $CO_2$-Masse am Ende des Mischrohres minimiert werden, wobei die Masse am Ende des Mischrohres abhängig ist von dem mittels des ersten Massenstrommessers gemessenen Abgasstroms.

Unabhängig von der Anzahl der vorhandenen Messergebnisse werden gute Ergebnisse für den Kalibrierfaktor erzielt, wenn der Kalibrierfaktor für den zweiten Massenstrommesser durch Iteration bestimmt wird.

Alternativ kann der Kalibrierfaktor für den zweiten Massenstrommesser analytisch bestimmt werden. Eine solche analytische Lösung kann jedoch nur durchgeführt werden, wenn über die gesamte berücksichtigte Zykluslänge ein konstanter Durchfluss besteht und keine weitere Signalverarbeitung am Resultat durchzuführen ist.

Dabei wird die am ersten Gasanalysegerät ermittelte Kohlenstoffdioxidmasse in Abhängigkeit des Massenstroms des ersten Massenstrommessers und der im ersten Gasanalysegerät gemessenen Kohlenstoffdioxidkonzentration berechnet. Es handelt sich entsprechend auch hierbei nicht um einen direkt gemessenen Wert, sondern einen zu berechnenden Wert, der sich aus den bekannten Messapparaturen ergibt.

Vorzugsweise wird die Abgasmasse am Abgaskanal berichtigt, indem das Produkt aus der Differenz der Massenströme des ersten Massenstrommessers und des zweiten Massenstrommessers multipliziert mit dem Kalibrierfaktor sowie der Kohlenstoffdioxidkonzentration des zweiten Gasanalysegerätes durch Umrechnung vom trockenen Zustand auf den feuchten Zustand berichtigt wird. Dies erfolgt, indem ein Faktor $u_{CO2}$ und ein Faktor $K_{dry2wet}$ mit dem Produkt aus Abgasmassenstrom und Kohlenstoffdioxidkonzentration multipliziert werden, wobei der Faktor $K_{dry2wet}$ ein Faktor ist, über den von einem trockenen Zustand auf den vorhandenen feuchten Zustand des Abgasstroms umgerechnet wird und der Faktor $u_{CO2}$ der Quotient der Dichte des Kohlenstoffdioxids zur Dichte des Abgases ist. So werden die Berechnungswerte zur Bestimmung des Kalibrierfaktors aufgrund der Berücksichtigung der unterschiedlichen Dichten und Feuchten im Abgasstrom verbessert.

Beim iterativen Verfahren wird im ersten Schritt der Iteration ein Berechnungsfenster festgelegt, bei dem erste Hilfskalibrierfaktoren festgelegt werden, indem eine definierte positive und negative Abweichung vom Wert 1 festgelegt wird und die Differenz der am Mischkanal ermittelten Kohlenstoffdioxidmasse und der mittels der Konzentration und den Werten der Massenstrommesser ermittelten Kohlenstoffdioxidmasse im Abgaskanal für die beiden definierten Hilfskalibrierfaktoren berechnet wird,

in einem zweiten Schritt werden die beiden Punkte durch eine lineare Funktion miteinander verbunden, deren Nulldurchgang bezüglich der Differenz der am Mischkanal ermittelten Kohlenstoffdioxidmasse und der mittels der Konzentration und den Werten der Massenstrommesser ermittelten Kohlenstoffdioxidmasse im Abgaskanal ermittelt wird und dieser als Vorkalibrierfaktor angenommen wird,

in einem dritten Schritt werden neue Hilfskalibrierfaktoren festgelegt, indem eine negative und eine positive Abweichung vom Vorkalibrierfaktor festgelegt wird, die 50% der Abweichung des vorherigen Iterationsschritts entspricht, und für diese Hilfskalibrierfaktoren die Differenz der am Mischkanal ermittelten Kohlenstoffdioxidmasse und der mittels der Konzentration und den Werten der Massenstrommesser ermittelten Kohlenstoffdioxidmasse im Abgaskanal berechnet wird,

und anschließend wird mit Schritt zwei fortgefahren, wobei diese Iteration definiert häufig wiederholt wird und der letzte Vorkalibrierfaktor als Kalibrierfaktor für den ersten Massenstrommesser genutzt wird.

Auf diese Weise wird üblicherweise in nur fünf Iterationsschritten der Kalibrierfaktor mit einer ausreichenden Genauigkeit bestimmt, wodurch Abweichungen der Kohlendioxidmasse in den Abgasbeuteln und der Rohmessung gegen 0 konvergieren.

Vorzugsweise wird durch das erste Gasanalysegerät die Kohlenstoffdioxidmasse aus der Kohlenstoffdioxidkonzentration aus Probebeuteln bestimmt. Dieses Verfahren zur Analyse von Abgasprobenbeuteln ist gesetzlich definiert und führt zu Ergebnissen, die entsprechend den gesetzlichen Bestimmungen genügen.

In einer weiterführenden vorteilhaften Ausführung des Verfahrens wird der Massenstrom im Abgaskanal errechnet aus der Summe des Produktes des Kalibrierfaktors und des Massenstromes des zweiten Massenstrommessers und eines Produktes eines Nichtlinearitätsfaktors mit dem Kalibrierfaktor und einer Differenz eines maximalen Massenstroms des zweiten Massenstrommessers und des momentanen Massenstroms des zweiten Massenstrommessers. Auf diese Weise können Fehler durch Nichtlinearitäten in den Messergebnissen des den Verdünnungsluftstrom messenden zweiten Massenstrommmessers eliminiert werden.

Dabei wird vorzugsweise der Nichtlinearitätsfaktor durch zusätzliche Iteration gewonnen, indem die Abweichung aller Kalibrierungsfaktoren für alle Messphasen minimiert wird.

In einer alternativen Ausführungsform wird der Nichtlinearitätsfaktor als Polynomialfunktion dargestellt und entsprechende Werte bei verschiedenen Luftmassenströmen für den zweiten Massenstrommmesser genutzt, Hierdurch werden die Ergebnisse erneut verbessert.

Eine weitere alternative Möglichkeit zur Bestimmung des Kalibrierfaktor ist es, wenn das erste Gasanalysegerät kontinuierlich die Kohlenstoffdioxidkonzentration misst und zur Kalibrierung Messphasen mit unterschiedlicher Länge festgelegt werden, wobei der berechnete Kalibrierfaktor verwendet wird, der bei einer minimalen Abweichung der beiden Kohlenstoffdioxidmassen voneinander ermittelt wurde. Dabei können beliebige Messzeiträume von beispielsweise 10 oder 20 Sekunden verwendet werden

Besonders gute Ergebnisse werden erzielt, wenn zur Kalibrierung die Messergebnisse über den gesamten Messzeitraum berücksichtigt werden. Durch die Verwendung einer solchen Vielzahl wird ein Mittelwert für den Kalibrierfaktor ermittelt, der den gesamten Messzeitraum und damit alle möglichen Abweichungen berücksichtigt, so dass auch für alle Messphasen eine ausreichend genaue Ermittlung des Abgasmassenstroms erreicht wird.

Dabei kann vorteilhafterweise auch ein Mittelwert der in den verschiedenen Messphasen ermittelten Vorkalibrierfaktoren ermittelt werden, der als zukünftiger Kalibrierfaktor verwendet wird.

Es wird somit ein Verfahren zur Kalibrierung eines Massenstrommessers in einer Constant Volume Sampling (CVS) Abgasanalyseanlage zur Verfügung gestellt, mit dem zu hohe Abweichungen vom zu ermittelnden Abgasmassenstrom zuverlässig vermieden werden. Vielmehr ist die Genauigkeit für den Abgasmassenstrom mit Hilfe dieses Verfahrens mit Abweichungen im kleinen einstelligen Prozentbereich zu bestimmen.

Das erfindungsgemäße Verfahren wird anhand des in den Figuren dargestellten Ausführungsbeispiels im Folgenden beschrieben.

Figur 1 zeigt den Aufbau einer Abgasanalyseanlage zur Durchführung des Verfahrens.

Figur 2 zeigt beispielhaft eine graphische Darstellung des Iterationsverfahrens.

Die erfindungsgemäße Abgasanalyseanlage besteht aus einem Luftfilter 10, über den Luft in einen Verdünnungsluftkanal 12 gelangt, Dieser Verdünnungsluftkanal 12 mündet in einen Mischkanal 14, an dessen Ende eine kritisch betriebene Venturldüse 16 durch die der angesaugte Mischstrom mittels eines Verdichters 18 gefördert wird. Zusätzlich mündet ein Abgaskanal 20 in diesen Mischkanal 14, dessen entgegengesetztes Ende mit einem als Abgasquelle 22 dienenden Verbrennungsmotor verbunden ist, so dass der Abgasstrom aus dem Abgaskanal 20 und die Verdünnungsluft aus dem Verdünnungsluftkanal 12 an einer Mündung 24 des Abgaskanals 20 gemischt werden. Um diese Mischung zu verbessern, können Blenden oder besondere Einströmrohre verwendet werden, die in der Figur nicht dargestellt sind. Der Bereich stromabwärts der Mündung bildet entsprechend einen Mischbereich 26, der als Anfang des Mischkanals 14 dient.

Stromabwärts dieses Mischbereichs 26, also nachdem eine möglichst gleichmäßige Durchmischung der Verdünnungsluft und des Abgases erfolgt ist, und stromaufwärts der Venturidüse 16 ragt in den Mischkanal 14 eine oder mehrere Probenahmesonden 28, über die ein Probengasstrom dienendes Abgas-Luft-Gemisch entnommen werden kann. Der Probengasstrom führt in einen Schrank 30, in dem Probebeutel 32 angeordnet sind, die mit diesem Abgas-Luft-Gemisch befüllt werden. Die Probebeutel 32 sind auch mit einem ersten Gasanalysegerät 34 verbunden, mittels dessen die Konzentrationen verschiedener Inhaltsstoffe des Abgas-Luft-Gemisches, wie beispielsweise THC, NO/NO$_2$/NO$_x$, CO, CO$_2$, O$_2$, CH$_4$, N$_2$O, NH$_3$ und SO$_2$ analysiert werden können. Hierzu werden Quantenkaskadenlaser, Flammenionisationsdetektoren, Chemilumineszenzdetektoren, paramagnetische Sauerstoffgasanalysatoren, und, insbesondere zur Kohlendioxidkonzentrationsmessung, Infrarotdetektoren im Gasanalysegerät 34 angeordnet und zur Analyse mit dem Mischgas versorgt.

Des Weiteren wird im Mischkanal 14 beziehungsweise am Mischkanal 14 ein erster Massenstrommesser 36 angeordnet, über den der Massenstrom oder der Volumenstrom im Mischkanal 14 direkt gemessen werden kann. Dieser erste Massenstrommesser 36 muss jedoch nicht als separater Massenstrommesser ausgeführt werden, sondern es kann an dieser Stelle in einer CVS-Anlage die kritisch betriebene Venturidüse gemeinsam mit den Messwerten für den Druck und die Temperatur dazu dienen, als Massenstrommesser zu genutzt zu werden. Mittels dieses Massenstrommessers 36 kann eine Gaskonzentration im Mischkanal 14, die über das Gasanalysegerät 34 bestimmt wird, in eine Gasmasse umgerechnet werden.

Eine weitere Probenahmesonde 38 ist im Abgaskanal 20 angeordnet und mit einem zweiten Gasanalysegerät 40 verbunden, mittels dessen der unverdünnte Abgasstrom direkt und kontinuierlich analysiert wird.

Da jedoch keine zuverlässig arbeitenden Abgasmassenstrommesser bekannt sind, die über eine lange Lebensdauer trotz der stark belasteten Messatmosphäre zuverlässige Ergebnisse liefern, ist im Verdünnungsluftkanal 12 ein zweiter Massenstrommesser 42 angeordnet, der kontinuierlich den Massenstrom der Verdünnungsluft misst. Entsprechend kann der Abgasmassenstrom, der zur Errechnung einer Abgasmasse notwendig ist, da die Gasanalysegeräte 34, 40 lediglich Konzentrationen messen können, durch Differenzbildung des Mischstroms vom Verdünnungsluftstrom berechnet werden. Problematisch ist jedoch, dass es sich um zwei relativ große Massenströme handelt, aus denen ein kleiner Massenstrom berechnet werden soll, denn in einem solchen Fall treten große Fehler bei der Berechnung der Abgasmasse auf, da der Abgasmassenstrom bei Abweichungen der beiden Massenstrommesser 36, 42 in unterschiedliche Richtungen sehr fehlerbehaftet berechnet wird.

Aus diesem Grund ist es notwendig, den zweiten Massenstrommesser 42 zum ersten Massenstrommesser 36 zu kalibrieren, um diese sich multiplizierenden Messfehler zu vermeiden.

Hierzu wird erfindungsgemäß der zweite Massenstrommesser 42, der den Luftstrom misst, zum ersten Massenstrommesser 36, der den Luft-Abgas-Mischstrom misst, kalibriert, indem die Kohlenstoffdioxidmasse, die sich aus dem Massenstrom des ersten Gasanalysegeräts 34 ergibt, gleichgesetzt mit der Abgasmasse, die sich aus den Messwerten des zweiten Gasanalysegerätes 40 ergibt.

Die Formel hierzu lautet:

$m_{mixCO_2}$ = m$_{exhCO_2}$ für eine definierte Messphase.

Dabei ergibt sich $m_{mixCO_2}$ direkt aus den Messwerten des ersten Gasanalysegerätes 34 sowie des ersten Massenstrommessers 36 im Mischkanal 14 zu:

$$m_{mixCO_2} = \int_0^t \dot{m}_{mix} \times c_{mixCO_2}\, dt,$$

wobei $\dot{m}_{mix}$ der Massenstrom des Abgas-Luftgemisches gemessen am ersten Massenstrommesser ist und $c_{mixCO2}$ die am ersten Abgasanalysegerät ermittelte Kohlenstoffdioxidkonzentration ist.

Die zu bestimmende Kohlenstoffdioxidmasse im Abgaskanal 20 ergibt sich aus:

$$m_{exhCO_2} = \int_0^t (\dot{m}_{Mix} - F_{Kal} \times \dot{m}_{dil}) \times c_{exhCO_2}\, dt$$

wobei $\dot{m}_{Mix} - F_{Kal} \times \dot{m}_{dil} = \dot{m}_{exh}$ , also der Gasmassenstrom im Abgaskanal 20 ist, der sich errechnet aus der Differenz des Gasmassenstroms $\dot{m}_{Mix}$ im Mischkanal 14 und dem Verdünnungsluftmassenstrom $\dot{m}_{dil}$ im Verdünnungsluftkanal 12 multipliziert mit einem Kalibrierfaktor $F_{Kal}$, der bei exakt gleich messenden Massenstrommessern entsprechend 1 wäre.

$c_{exhCO2}$ ist die am zweiten Gasanalysegerät gemessene Kohlenstoffdioxidkonzentration im Abgaskanal 20.

Zur Berichtigung dieser Messungen ist es noch notwendig, den Massenstrom auf Normluft umzurechnen, also mittels von Feuchtigkeitssensoren zu bestimmende Faktoren zu berücksichtigen. Hier wird einerseits ein Faktor $K_{dry2wet}$ genutzt, über den von einem trockenen Zustand auf den vorhandenen feuchten Zustand des Abgasstroms umgerechnet wird und andererseits der Faktor $u_{CO2}$ genutzt, der den Quotienten der Dichte des Kohlenstoffdioxids zur Dichte des Abgases bildet, so dass Dichteunterschiede ebenfalls berücksichtigt werden.

Die zu lösende Formel lautet dann:

$$m_{mixCO_2} = \int_0^t (\dot{m}_{Mix} - F_{Kal} \times \dot{m}_{dil}) \times c_{exhCO_2} \times K_{dry2wet} \times u_{CO_2} dt$$

Um diese Formel aufzulösen und den Kalibrierfaktor $F_{Kal}$ zu bestimmen, wird erfindungsgemäß ein iteratives Verfahren angewendet, bei dem zunächst zwei Hilfskalibrierfaktoren festgelegt werden, welche einen gleichen Abstand vom Wert 1 haben, also beispielsweise 0,98 und 1,02 betragen. Für diese biden Faktoron wird cin Verglich zwischen den sich ergebenden Differenzen der Kohlenstoffdioxidmassen berechnet.

$$m_{mixCO_2} - \int_0^t (\dot{m}_{Mix} - 0,98 \times \dot{m}_{dil}) \times c_{exhCO_2} \times K_{dry2wet} \times u_{CO_2} dt = f(0,98)$$

$$m_{mixCO_2} - \int_0^t (\dot{m}_{Mix} - 1,02 \times \dot{m}_{dil}) \times c_{exhCO_2} \times K_{dry2wet} \times u_{CO_2} dt = f(1,02)$$

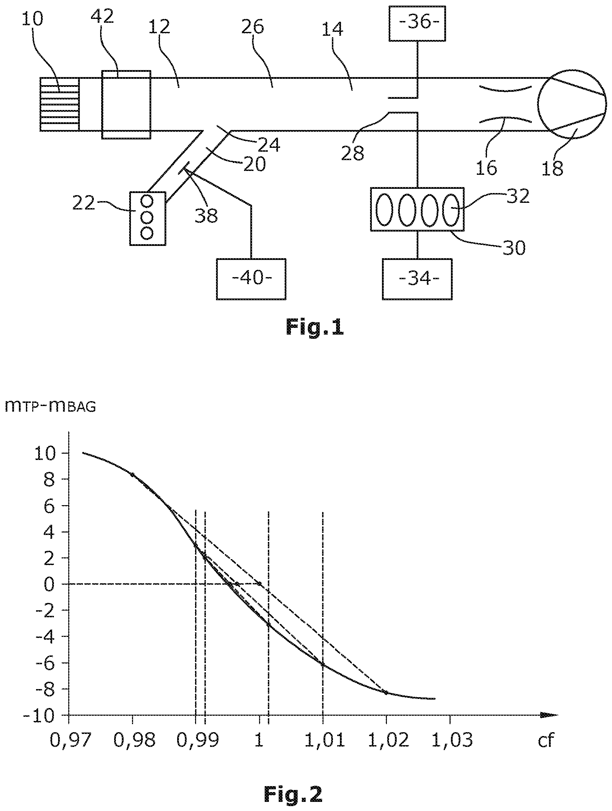

Diese Werte lassen sich konkret für beliebige Messzeiträume t errechnen und werden mittels einer linearen Gleichung g(x) miteinander verbunden. Anschließend wird der Wert g(0) für diese Gleichung ermittelt, wie dies auch in Figur 2 dargestellt ist.

Im Folgenden werden erneut zwei Hilfskalibrierfaktoren festgelegt, welche vom ermittelten Wert g(0), der im Ausführungsbeispiel gemäß Figur 2 bei 1,005 liegt, lediglich den halben Abstand von dem aufweisen, was zu Beginn als Abweichung vom Wert 0 angenommen wurde. In diesem Fall somit einen Abstand von 0,01. Im Folgenden lauten somit die Gleichungen:

$$m_{mixCO_2} - \int_0^t (\dot{m}_{Mix} - 0,995 \times \dot{m}_{dil}) \times c_{exhCO_2} \times K_{dry2wet} \times u_{CO_2} dt = f(0,995)$$

$$m_{mixCO_2} - \int_0^t (\dot{m}_{Mix} - 1,015 \times \dot{m}_{dil}) \times c_{exhCO_2} \times K_{dry2wet} \times u_{CO_2} dt = f(1,015)$$

Diese beiden Werte werden erneut durch eine lineare Gleichung g(x) miteinander verbunden und erneut für diese Gleichung g(0) bestimmt und der so ermittelte Wert als Vorkalibrierfaktor definiert. Daraufhin wird das Fenster erneut halbiert und zwar um den Punkt g(0).

Nach ca. fünf Iterationsschritten wird auf diese Weise ein sehr genaues Ergebnis für den Vorkalibrierfaktor erreicht, der dann als Kalibrierfaktor $F_{Kal}$ in den folgenden Messphasen genutzt wird.

Wird dieser Kalibrierfaktor für unterschiedliche Messphasen mit unterschiedlichen Massenströmen bestimmt, kann es sich herausstellen, dass ein Drift zwischen den Messwerten der beiden Massenstrommessern entsteht, der beispielsweise bei steigenden Massenströmen deutlich höher ist. Um dies mit einzuberechnen kann entweder ein eigener Kalibrierfaktor für unterschiedliche Messwerte hinterlegt werden, oder eine entsprechende Funktion des Kalibrierfaktors errechnet werden.

Ein derartiger Nichtlinearitätsfaktor kann beispielsweise durch ein zusätzliches lineares Iterationsverfahren mithilfe der folgenden Formel gewonnen werden.

$$\int_0^t \left( \dot{m}_{Mix} - \left( F_{Kal} \times \dot{m}_{dil} + F_{lin} \times F_{Kal} \times (\dot{m}_{dilmax} - \dot{m}_{dil}) \right) \right) \times c_{exh_{CO_2}} \times K_{dryzwet} \times$$

$$u_{CO_2} dt - m_{mix_{CO_2}} \to 0,$$

wobei $F_{lin}$ der Nichtlinearitätsfaktor ist und $\dot{m}_{dilmax}$ dem maximalen Verdünnungsluftmassenstrom bilden.

Neben der iterativen Bestimmung des Nichtlinearitätsfaktors kann dieser gegebenenfalls auch durch eine Polynomialfunktion bestimmt werden.

Für diese Berechnungen können verschiedenste Messwerte oder Messphasen zur Bestimmung des Kalibrierfaktors benutzt werden oder dieser stetig während des normalen Messbetriebes angepasst werden.

Diese Bestimmung des Kalibrierfaktors verhindert zuverlässig zu große Abweichungen bei der Berechnung des Abgasmassenstroms aus den Messwerten eines Massenstrommessers im Verdünnungsluftkanal und eines Massenstrommessers im Mischkanal. Entsprechend können, ohne zusätzliche Bauteile oder Massenstrommesser verwenden zu müssen, mit den vorhandenen Messgeräten die beiden Massenstrommesser aufeinander abgestimmt werden und Fehler vermieden werden.

Es sollte deutlich sein, dass die Erfindung nicht auf das beschriebene Austunrungsbeispiel begrenzt ist. des weiteren solite Klar sein, dass das in der verdunnungslutt enthaltene Kohlenstoffdioxid, wie es gesetzlich vorgeschrieben ist, bei der Berechnung über den verdunnungstaktor abgezogen wird.

**Patentansprüche**

1.  Verfahren zur Kalibrierung eines Massenstrommessers in einer Constant Volume Sampling (CVS) Abgasanalyseanlage mit einer Abgasquelle (22), über die Abgas in einen Abgaskanal (20) eingeleitet wird, der in einen Mischkanal (14) mündet,

    einem Verdünnungsluftkanal (12), in den Verdünnungsluft gefördert wird, und der in den Mischkanal (14) mündet, einem ersten Massenstrommesser (36) im Mischkanal (14), in dem ein Abgas-Luftgemisch strömt, und mit dem ein Massenstrom ($\dot{m}_{Mix}$) des Abgas-Luftgemisches im Mischkanal (14) der Abgasanalyseanlage gemessen wird, einem zweiten zu kalibrierenden Massenstrommesser (42) im Verdünnungsluftkanal (12), mit dem ein Massenstrom ($\dot{m}_{dil}$) der in die Abgasanalyseanlage angesaugten Luft gemessen wird, einem ersten Gasanalysegerät (34), in dem eine Kohlenstoffdioxidkonzentration ($c_{mix_{CO2}}$) des Abgas-Luftgemisches im Mischkanal (14) kontinuierlich und/oder diskontinuierlich über Probebeutel (32) für einen definierten Messzyklus gemessen wird, einem zweiten Gasanalysegerät (40), in dem die Kohlenstoffdioxidkonzentration ($c_{exh_{CO2}}$) des Rohabgases im Abgaskanal (20) kontinuierlich gemessen wird, wobei ein Kalibrierfaktor ($F_{Kal}$) für den zweiten Massenstrommesser (42) durch Vergleich einer ersten Kohlenstoffdioxidmasse ($m_{mixCO2}$), die über die gemessene Kohlenstoffdioxidkonzentration ($c_{mixCO2}$) im ersten Gasanalysegerät (34) bestimmt wird, mit einer zweiten Kohlenstoffdioxidmasse ($m_{exhCO2}$), die in Abhängigkeit der gemessenen Kohlenstoffdioxidkonzentration ($c_{exhCO2}$) des zweiten Gasanalysegerätes (40) und den Massenströmen ($\dot{m}_{Mix}$, $\dot{m}_{dil}$) der beiden Massenstrommesser (36, 42) bestimmt wird.

2.  Verfahren nach Anspruch 1,
    **dadurch gekennzeichnet, dass**
    zur Bestimmung des Kalibrierfaktors ($F_{Kal}$) eine am ersten Gasanalysegerät (34) ermittelte erste Kohlenstoffdioxidmasse ($m_{mixCO2}$) gleichgesetzt wird mit einer zweiten Kohlenstoffdioxidmasse ($m_{exhCO2}$), die errechnet wird, indem die Kohlenstoffdioxidkonzentrationen ($c_{exhCO2}$) des zweiten Gasanalysegerätes (40) multipliziert mit der Differenz aus den Massenströmen ($\dot{m}_{Mix}$, $\dot{m}_{dil}$) des ersten Massenstrommessers (36) und des mit einem Kalibrierfaktor ($F_{Kal}$) multiplizierten zweiten Massenstrommessers (42) über die Zeit (t) integriert wird.

3.  Verfahren nach Anspruch 2,
    **dadurch gekennzeichnet, dass**
    der Kalibrierfaktor ($F_{Kal}$) für den zweiten Massenstrommesser (42) durch Iteration bestimmt wird.

4.  Verfahren nach Anspruch 2,
    **dadurch gekennzeichnet, dass**
    der Kalibrierfaktor ($F_{Kal}$) für den zweiten Massenstrommesser (42) analytisch bestimmt wird.

**5.** Verfahren nach einem der Ansprüche 2 bis 4,
**dadurch gekennzeichnet, dass**
die am ersten Gasanalysegerät (34) ermittelte Kohlenstoffdioxidmasse ($m_{mixCO2}$) in Abhängigkeit des Massenstroms ($\dot{m}_{Mix}$) des ersten Massenstrommessers (36) und der im ersten Gasanalysegerät (34) gemessenen Kohlenstoffdioxidkonzentration ($c_{mixCO2}$) berechnet wird.

**6.** Verfahren nach einem der Ansprüche 2 bis 5,
**dadurch gekennzeichnet, dass**
das Produkt aus der Differenz der Massenströme ($\dot{m}_{Mix}$, $\dot{m}_{dil}$) des ersten Massenstrommessers (36) und des zweiten Massenstrommessers (42) multipliziert mit dem Kalibrierfaktor ($F_{Kal}$) sowie der Kohlenstoffdioxidkonzentration ($c_{exhCO2}$) des zweiten Gasanalysegerätes (40) durch Umrechnung vom trockenen Zustand auf den feuchten Zustand berichtigt wird.

**7.** Verfahren nach einem der Ansprüche 2 bis 6,
**dadurch gekennzeichnet, dass**

im ersten Schritt der Iteration ein Berechnungsfenster festgelegt wird, bei dem erste Hilfskalibrierfaktoren festgelegt werden, indem eine definierte positive und negative Abweichung vom Wert 1 festgelegt wird und die Differenz der am Mischkanal (14) ermittelten Kohlenstoffdioxidmasse ($m_{mixCO2}$) und der mittels der Kohlenstoffdioxidkonzentration ($c_{exhCO2}$) und den gemessenen Massenströmen ($\dot{m}_{Mix}$, $\dot{m}_{dil}$) der Massenstrommesser (36, 42) ermittelten Kohlenstoffdioxidmasse ($m_{exhCO2}$) im Abgaskanal (20) für die beiden definierten Hilfskalibrierfaktoren berechnet wird,
in einem zweiten Schritt die beiden Punkte durch eine lineare Funktion miteinander verbunden werden, deren Nulldurchgang bezüglich der Differenz der am Mischkanal (14) ermittelten Kohlenstoffdioxidmasse ($m_{mixCO2}$) und der mittels der Konzentration ($c_{exhCO2}$) und den Massenströmen ($\dot{m}_{Mix}$, $\dot{m}_{dil}$) der Massenstrommesser (36, 42) ermittelten Kohlenstoffdioxidmasse ($m_{exhCO2}$) im Abgaskanal (20) ermittelt wird und dieser als Vorkalibrierfaktor angenommen wird,
in einem dritten Schritt neue Hilfskalibrierfaktoren festgelegt werden, indem eine negative und eine positive Abweichung vom Vorkalibrierfaktor festgelegt wird, die 50% der Abweichung des vorherigen Iterationsschritts entspricht, und für diese Hilfskalibrierfaktoren die Differenz der am Mischkanal (14) ermittelten Kohlenstoffdioxidmasse ($m_{mixCO2}$) und der mittels der Konzentration ($c_{exhCO2}$) und den Massenströmen ($\dot{m}_{Mix}$, $\dot{m}_{dil}$) der Massenstrommesser (36, 42) ermittelten Kohlenstoffdioxidmasse ($m_{exhCO2}$) im Abgaskanal (20) berechnet wird, mit Schritt zwei fortgefahren wird und diese Iteration definiert häufig wiederholt wird, wobei der letzte ermittelte Vorkalibrierfaktor mit Abweichung 0 als Kalibrierfaktor ($F_{Kal}$) genutzt wird.

**8.** Verfahren nach einem der Ansprüche 2 bis 7,
**dadurch gekennzeichnet, dass**
das erste Gasanalysegerät (34) die Kohlenstoffdioxidmasse ($m_{mixCO2}$) aus der Kohlenstoffdioxidkonzentration ($c_{mixCO2}$) aus Probebeuteln (32) bestimmt.

**9.** Verfahren nach einem der Ansprüche 2 bis 8,
**dadurch gekennzeichnet, dass**
der Massenstrom ($\dot{m}_{exh}$) im Abgaskanal (20) errechnet wird aus der Summe des Produktes des Kalibrierfaktor ($F_{Kal}$) und des Massenstroms ($\dot{m}_{dil}$) des zweiten Massenstrommessers (42) und eines Produktes eines Nichtlinearitätsfaktors ($F_{lin}$) mit dem Kalibrierfaktor ($F_{Kal}$) und einer Differenz eines maximalen Massenstroms ($\dot{m}_{dilmax}$) des zweiten Massenstrommessers (42) und des momentanen Massenstroms ($\dot{m}_{dil}$) des zweiten Massenstrommessers (42).

**10.** Verfahren nach Anspruch 9,
**dadurch gekennzeichnet, dass**
der Nichtlinearitätsfaktor ($F_{lin}$) durch zusätzliche Iteration gewonnen wird, indem die Abweichung aller Kalibrierungsfaktoren ($F_{Kal}$) für alle Messphasen minimiert wird.

**11.** Verfahren nach Anspruch 9,
**dadurch gekennzeichnet, dass**
der Nichtlinearitätsfaktor ($F_{lin}$) als Polynomialfunktion dargestellt wird.

**12.** Verfahren nach einem der Ansprüche 2 bis 7,
**dadurch gekennzeichnet, dass**

das erste Gasanalysegerät (34) kontinuierlich die Kohlenstoffdioxidkonzentration ($c_{mixCO2}$) misst und zur Kalibrierung Messphasen mit unterschiedlicher Länge festgelegt werden, wobei der berechnete Kalibrierfaktor ($F_{Kal}$) verwendet wird, der bei einer minimalen Abweichung der beiden Kohlenstoffdioxidmassen ($m_{exhCO2}$, $m_{mixCO2}$) voneinander ermittelt wurde.

13. Verfahren nach einem der Ansprüche 2 bis 12,
**dadurch gekennzeichnet, dass**
zur Kalibrierung die Messergebnisse über den gesamten Messzeitraum berücksichtigt werden.

14. Verfahren nach einem der Ansprüche 2 bis 12,
**dadurch gekennzeichnet, dass**
ein Mittelwert der in den verschiedenen Messphasen ermittelten Vorkalibrierfaktoren ermittelt wird, der als zukünftiger Kalibrierfaktor ($F_{Kal}$) verwendet wird.

**Claims**

1. Method for calibrating a mass flow meter in a constant volume sampling (CVS) exhaust gas analysis system having

    an exhaust gas source (22) via which exhaust gas is introduced into an exhaust gas duct (20) which opens into a mixing channel (14)
    a dilution air channel (12) into which dilution air is conveyed and which opens into the mixing channel (14)
    a first mass flow meter (36) in the mixing channel (14), in which an exhaust gas-air mixture flows, and with which a mass flow ($\dot{m}_{Mix}$) of the exhaust gas-air mixture in the mixing channel (14) of the exhaust gas analysis system is measured,
    a second mass flow meter (42) to be calibrated in the dilution air channel (12), with which a mass flow ($\dot{m}_{dil}$) of the air sucked into the exhaust gas analysis system is measured,
    a first gas analyzer (34), in which a carbon dioxide concentration ($c_{mixCO2}$) of the exhaust gas-air mixture in the mixing channel (14) is measured continuously and/or discontinuously via sample bags (32) for a defined measurement cycle,
    a second gas analyzer (40) in which the carbon dioxide concentration ($c_{exhCO2}$) of the raw exhaust gas in the exhaust gas channel (20) is continuously measured, wherein
    a calibration factor ($F_{Kal}$) for the second mass flow meter (42) is determined by comparing a first carbon dioxide mass ($m_{mixCO2}$) determined via the measured carbon dioxide concentration ($c_{mixCO2}$) in the first gas analyzer (34) with a second carbon dioxide mass ($m_{exhCO2}$) being determined as a function of the measured carbon dioxide concentration ($c_{exhCO2}$) of the second gas analyzer (40) and the mass flows ($\dot{m}_{Mix}$, $\dot{m}_{dil}$) of the two mass flow meters (36, 42).

2. Method according to claim 1,
**characterized in that**
for determining the calibration factor ($F_{Kal}$), a first carbon dioxide mass ($m_{mixCO2}$) determined at the first gas analyzer (34) is equated with a second carbon dioxide mass ($m_{exhCO2}$) calculated by integrating over time (t) the carbon dioxide concentrations ($c_{exhCO2}$) of the second gas analyzer (40) multiplied by the difference between the mass flows ($\dot{m}_{Mix}$, $\dot{m}_{dil}$) of the first mass flow meter (36) and the second mass flow meter (42) multiplied by a calibration factor ($F_{Kal}$).

3. Method according to claim 2,
**characterized in that**
the calibration factor ($F_{Kal}$) for the second mass flow meter (42) is determined by iteration.

4. Method according to claim 2,
**characterized in that**
the calibration factor ($F_{Kal}$) for the second mass flow meter (42) is determined analytically.

5. Method according to any one of claims 2 to 4,
**characterized in that**
the carbon dioxide mass ($m_{mixCO2}$) determined at the first gas analyzer (34) is calculated as a function of the mass flow ($\dot{m}_{Mix}$) of the first mass flow meter (36) and the carbon dioxide concentration ($c_{mixCO2}$) measured in the first gas analyzer (34).

6. Method according to any one of claims 2 to 5,
**characterized in that**
the product of the difference of the mass flows ($\dot{m}_{Mix}$, $\dot{m}_{dil}$) of the first mass flow meter (36) and the second mass flow meter (42) multiplied by the calibration factor ($F_{Kal}$) and the carbon dioxide concentration ($c_{exhCO2}$) of the second gas analyzer (40) is corrected by conversion from the dry state to the wet state.

7. Method according to any one of claims 2 to 6,
**characterized in that**

in the first step of the iteration, a calculation window is defined, in which first auxiliary calibration factors are defined, **in that** a defined positive and negative deviation from the value 1 is established, and the difference between the carbon dioxide mass ($m_{mixCO2}$) determined at the mixing channel (14) and the carbon dioxide mass ($m_{exhCO2}$) in the exhaust gas channel (20) determined by means of the carbon dioxide concentration ($c_{exhCO2}$) and the measured mass flows ($\dot{m}_{Mix}$, $\dot{m}_{dil}$) of the mass flow meters (36, 42), is calculated for the two defined auxiliary calibration factors,
in a second step, the two points are connected to one another by a linear function whose zero crossing is determined in relation to the difference between the mass of carbon dioxide ($m_{mixCO2}$) determined at the mixing channel (14) and that determined by means of the concentration ($c_{exhCO2}$) and the mass flows ($\dot{m}_{Mix}$, $\dot{m}_{dil}$) of the mass flow meters (36, 42), the carbon dioxide mass ($m_{exhCO2}$) in the exhaust gas channel (20) and this is adopted as the pre-calibration factor,
in a third step, new auxiliary calibration factors are determined by determining a negative and a positive deviation from the pre-calibration factor which corresponds to 50% of the deviation of the previous iteration step, and for these auxiliary calibration factors, the difference between the mass of carbon dioxide ($m_{mixCO2}$) determined at the mixing channel (14) and that determined by means of the concentration ($c_{exhCO2}$) and the mass flows ($\dot{m}_{Mix}$, $\dot{m}_{dil}$) of the mass flow meters (36, 42), the carbon dioxide mass ($m_{exhCO2}$) in the exhaust gas channel (20) is calculated,
proceeding with step two and repeating this iteration a defined number of times, wherein the last determined pre-calibration factor with deviation 0 is used as calibration factor ($F_{Kal}$).

8. Method according to one of the claims 2 to 7,
**characterized in that**
the first gas analyzer (34) determines the carbon dioxide mass ($m_{mixCO2}$) from the carbon dioxide concentration ($c_{mixCO2}$) from sample bags (32).

9. Method according to any one of claims 2 to 8,
**characterized in that**
the mass flow ($\dot{m}_{exh}$) in the exhaust gas channel (20) is calculated from the sum of the product of the calibration factor ($F_{Kal}$) and the mass flow ($\dot{m}_{dil}$) of the second mass flow meter (42) and a product of a nonlinearity factor ($F_{lin}$) with the calibration factor ($F_{Kal}$) and a difference of a maximum mass flow ($\dot{m}_{dilmax}$) of the second mass flow meter (42) and the instantaneous mass flow ($\dot{m}_{dil}$) of the second mass flow meter (42).

10. Method according to claim 9,
**characterized in that**
the nonlinearity factor ($F_{lin}$) is obtained by additional iteration by minimizing the deviation of all calibration factors ($F_{Kal}$) for all measurement phases.

11. Method according to claim 9,
**characterized in that**
the nonlinearity factor ($F_{lin}$) is represented as a polynomial function.

12. Method according to any one of claims 2 to 7,
**characterized in that**
the first gas analyzer (34) continuously measures the carbon dioxide concentration ($c_{mixCO2}$) and measurement phases of different lengths are defined for calibration, wherein the calculated calibration factor ($F_{Kal}$) determined at a minimum deviation of the two carbon dioxide masses ($m_{exhCO2}$, $m_{mixCO2}$) from each other is used.

13. Method according to any one of claims 2 to 12,
**characterized in that**

the measurement results over the entire measurement period are taken into account for calibration.

**14.** Method according to any one of claims 2 to 12,
**characterized in that**
an average value of the pre-calibration factors determined in the various measurement phases is determined, which is used as the future calibration factor ($F_{Kal}$).

**Revendications**

**1.** Procédé d'étalonnage d'un débitmètre massique dans une installation d'analyse des gaz d'échappement par échantillonnage à volume constant (CVS) comprenant

une source de gaz d'échappement (22) par laquelle des gaz d'échappement sont introduits dabs un canal d'échappement (20) qui s'ouvre dans un canal de mélange (14),
un canal d'air de dilution (12), dans lequel de l'air de dilution est acheminé, et qui s'ouvre dans le canal de mélange (14),
un premier débitmètre massique (36) dans le canal de mélange (14), dans lequel s'écoule un mélange de gaz d'échappement et d'air, et par lequel est mesuré un débit massique ($\dot{m}_{Mix}$) du mélange de gaz d'échappement et d'air dans le canal de mélange (14) dans l'installation d'analyse des gaz d'échappement,
un deuxième débitmètre massique (42) à étalonner dans le canal d'air de dilution (12), par lequel est mesuré un débit massique ($\dot{m}_{dil}$) de l'air aspiré dans l'installation d'analyse des gaz d'échappement,
un premier analyseur de gaz (34), dans lequel une concentration de dioxyde de carbone ($c_{mixCO2}$) du mélange de gaz d'échappement et d'air dans le canal de mélange (14) est mesurée en continu et/ou de manière discontinue au moyen de sacs d'échantillonnage (32) pour un cycle de mesure défini,
un deuxième analyseur de gaz (40), dans lequel la concentration de dioxyde de carbone ($c_{mixCO2}$) des gaz d'échappement bruts dans le canal d'échappement (20) est mesurée en continu,
**caractérisé en ce que**
un facteur d'étalonnage ($F_{Kal}$) pour ledit deuxième débitmètre massique (42) est déterminé par comparaison d'une première masse de dioxyde de carbone ($m_{mixCO2}$), déterminée par la concentration de dioxyde de carbone ($c_{mixCO2}$) mesurée dans le premier analyseur de gaz (34), avec une deuxième masse de dioxyde de carbone ($m_{exhCO2}$), déterminée en fonction de la concentration de dioxyde de carbone ($c_{mixCO2}$) mesurée du deuxième analyseur de gaz (40) et les débits massiques ($\dot{m}_{Mix}$, $\dot{m}_{dil}$) des deux débitmètres massiques (36, 42).

**2.** Procédé selon la revendication 1,
**caractérisé en ce que**
pour déterminer ledit facteur d'étalonnage ($F_{Kal}$), une première masse de dioxyde de carbone ($m_{mixCO2}$) obtenue au premier analyseur de gaz (34) est égalisé à une deuxième masse de dioxyde de carbone ($m_{exhCO2}$) calculée en intégrant sur le temps (t) les concentrations de dioxyde de carbone ($c_{exhCO2}$) du deuxième analyseur de gaz (40) multipliées par la différence entre les débits massiques ($\dot{m}_{Mix}$, $\dot{m}_{dil}$) du premier débitmètre massique (36) et du deuxième débitmètre massique (42) multiplié par un facteur d'étalonnage ($F_{Kal}$).

**3.** Procédé selon la revendication 2,
**caractérisé en ce que**
ledit facteur d'étalonnage ($F_{Kal}$) pour le deuxième débitmètre massique (42) est déterminé par itération.

**4.** Procédé selon la revendication 2,
**caractérisé en ce que**
ledit facteur d'étalonnage ($F_{Kal}$) pour le deuxième débitmètre massique (42) est déterminé de manière analytique.

**5.** Procédé selon l'une des revendications 2 à 4,
**caractérisé en ce que**
la masse de dioxyde de carbone ($m_{mixCO2}$) obtenue au premier analyseur de gaz (34) est calculée en fonction du débit massique ($\dot{m}_{Mix}$) dudit premier débitmètre massique (36) et la concentration de dioxyde de carbone ($c_{mixCO2}$) mesurée dans le premier analyseur de gaz (34).

**6.** Procédé selon l'une des revendications 2 à 5,
**caractérisé en ce que**

le produit de la différence des débits massiques ($\dot{m}_{Mix}$, $\dot{m}_{dil}$) du premier débitmètre massique (36) et du deuxième débitmètre massique (42) multipliée par ledit facteur d'étalonnage ($F_{Kal}$) ainsi que la concentration de dioxyde de carbone ($c_{exhCO2}$) du deuxième analyseur de gaz (40) est corrigé par conversion de l'état sec à l'état humide.

7. Procédé selon l'une des revendications 2 à 6,
   **caractérisé en ce que**

   dans la première étape de l'itération, on définit une fenêtre de calcul, dans laquelle des premiers facteurs d'étalonnage auxiliaires sont définis en définissant un écart positif et négatif par rapport à la valeur 1 et on calcule, pour les deux facteurs d'étalonnage auxiliaires définis, la différence entre la masse de dioxyde de carbone ($m_{mixCO2}$) obtenue audit canal de mélange (14) et la masse de dioxyde de carbone ($m_{exhCO2}$) dans le canal d'échappement (20) obtenue au moyen de la concentration de dioxyde de carbone ($c_{mixCO2}$) et des débits massiques ($\dot{m}_{Mix}$, $\dot{m}_{dil}$) des débitmètres massiques (36, 42),
   dans une deuxième étape, les deux points sont reliés l'un à l'autre par une fonction linéaire dont le passage par zéro est déterminé en vue de la différence entre la masse de dioxyde de carbone ($m_{mixCO2}$) obtenue audit canal de mélange (14) et la masse de dioxyde de carbone ($m_{exhCO2}$) obtenue au moyen de la concentration ($c_{mixCO2}$) et des débits massiques ($\dot{m}_{Mix}$, $\dot{m}_{dil}$) des débitmètres massiques (36, 42) dans le canal d'échappement (20) et on l'adopte comme facteur de pré-étalonnage,
   dans une troisième étape, on définit de nouveaux facteurs d'étalonnage auxiliaires en définissant un écart négatif et positif du facteur de pré-étalonnage, qui correspond à 50% de l'écart de l'étape d'itération précédente, et on calcule, pour ces facteurs d'étalonnage auxiliaires, la différence entre la masse de dioxyde de carbone ($m_{mixCO2}$) obtenue audit canal de mélange (14) et la masse de dioxyde de carbone ($m_{exhCO2}$) dans le canal d'échappement (20) obtenue au moyen de la concentration ($c_{mixCO2}$) et les débits massiques ($\dot{m}_{Mix}$, $\dot{m}_{dil}$) des débitmètres massiques (36, 42),
   on continue avec la deuxième étape et on répète cette itération un nombre de fois défini, le dernier facteur de pré-étalonnage obtenu avec un écart 0 est utilisé comme facteur d'étalonnage ($F_{Kal}$).

8. Procédé selon l'une des revendications 2 à 7,
   **caractérisé en ce que**
   le premier analyseur de gaz (34) détermine la masse de dioxyde de carbone ($m_{exhCO2}$) à partir de la concentration de dioxyde de carbone ($c_{mixCO2}$) provenant de sacs d'échantillonnage (32).

9. Procédé selon l'une quelconque des revendications précédentes, **caractérisé en ce que**
   le débit massique ($\dot{m}_{exh}$) dans le canal de gaz d'échappement (20) est calculé à partir de la somme du produit du facteur d'étalonnage ($F_{Kal}$) et du débit massique ($\dot{m}_{dil}$) dudit deuxième débitmètre massique (42) et d'un produit d'un facteur de non-linéarité ($F_{lin}$) avec le facteur d'étalonnage ($F_{Kal}$) et d'une différence entre un débit massique maximal ($\dot{m}_{dilmax}$) dudit deuxième débitmètre massique (42) et le débit massique momentané ($\dot{m}_{dil}$) dudit deuxième débitmètre massique (42).

10. Procédé selon la revendication 9,
    **caractérisé en ce que**
    le facteur de non-linéarité ($F_{lin}$) est obtenu par itération additionnelle en minimisant l'écart de tous les facteurs d'étalonnage ($F_{Kal}$) pour toutes les phases de mesurage.

11. Procédé selon la revendication 9,
    **caractérisé en ce que**
    le facteur de non-linéarité ($F_{lin}$) est représenté comme une fonction polynomiale.

12. Procédé selon l'une des revendications 2 à 7,
    **caractérisé en ce que**
    premier analyseur de gaz (34) mesure en continu la concentration de dioxyde de carbone ($c_{mixCO2}$), et des phases de mesurage de longueurs différentes, nécessaires pour l'étalonnage, sont définies, en utilisant le facteur d'étalonnage ($F_{Kal}$) calculé qui a été déterminé lors d'un écart minimal des deux masses de dioxyde de carbone ($m_{exhCO2}$, $m_{mixCO2}$) l'une de l'autre.

13. Procédé selon l'une des revendication 2 à 12,
    **caractérisé en ce que**,
    pour l'étalonnage, on prend en compte les résultats de mesurage sur tout le temps de mesurage.

**14.** Procédé selon l'une des revendication 2 à 12,
**caractérisé en ce qu'**on
détermine une valeur moyenne des facteurs de pré-étalonnage déterminés dans les phases de mesurage différentes, qui est utilisée comme facteur d'étalonnage futur ($F_{Kal}$).

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060216826 A1
- EP 2811267 A1
- EP 2515095 A1